(19) Europäisches Patentamt

European Patent Office

Office européen des brevets

(11) **EP 0 631 290 B1**

(12) **EUROPEAN PATENT SPECIFICATION**

(45) Date of publication and mention
of the grant of the patent:
**20.10.1999 Bulletin 1999/42**

(51) Int Cl.$^6$: **G21C 19/42**, G21C 19/46

(21) Application number: **94304584.9**

(22) Date of filing: **23.06.1994**

(54) **Method of operating a nuclear fuel reprocessing plant**

Verfahren zum Betreiben einer Wiederaufbereitungsanlage für Kernbrennstoff

Procédé pour actionner une installation de retraitement de combustible nucléaire

(84) Designated Contracting States:
**FR GB**

(30) Priority: **24.06.1993 JP 15349993**

(43) Date of publication of application:
**28.12.1994 Bulletin 1994/52**

(60) Divisional application: **97112218.9 / 0 817 207**

(73) Proprietor: **Hitachi, Ltd.**
**Chiyoda-ku, Tokyo 101 (JP)**

(72) Inventors:
- **Fukasawa, Tetsuo**
  **Hitachi-shi (JP)**
- **Kawamura, Fumio**
  **Mito-shi (JP)**
- **Sasahira, Akira**
  **Hitachi-shi (JP)**
- **Nakamura, Tomotaka**
  **Hitachi-shi (JP)**
- **Ogawa, Kinya**
  **Hitachi-shi (JP)**
- **Kondo, Yoshikazu**
  **Hitachi-shi (JP)**

(74) Representative:
**Paget, Hugh Charles Edward et al**
**MEWBURN ELLIS**
**York House**
**23 Kingsway**
**London WC2B 6HP (GB)**

(56) References cited:
**EP-A- 0 389 801**          **FR-A- 2 586 502**
**GB-A- 2 217 848**

- **DATABASE WPI Week 901, 1990 Derwent Publications Ltd., London, GB; AN 90-003288 & JP-A-1 285 899 (NIPPON GENSHIRYOKU JIGYO, TOSHIBA KK) 16 November 1989**
- **DATABASE WPI Week 8531, 1985 Derwent Publications Ltd., London, GB; AN 85-187273 & JP-A-60 115 899 (MITSUBISHI ELECTRIC CO, MITSUBISHI HEAVY IND KK) 22 June 1985**
- **KERNTECHNIK, vol.54, no.4, 1989, MUNCHEN DE pages 225 - 229 KUBE ET AL. 'Modern control systems and methods for optimization of the PUREX process'**
- **DATABASE WPI Week 8835, 1988 Derwent Publications Ltd., London, GB; AN 88-247045 & JP-A-63 180 894 (HITACHI KK) 25 July 1988 & JP-A-63 180 894 (HITACHI KK)**
- **DATABASE WPI Week 8811, 1988 Derwent Publications Ltd., London, GB; AN 88-073994 & JP-A-63 027 796 (TOSHIBA KK) 5 February 1988 & JP-A-63 027 796 (TOSHIBA KK)**
- **DATABASE WPI Week 8832, 1988 Derwent Publications Ltd., London, GB; AN 88-224448 & JP-A-63 159 793 (HITACHI KK) 2 July 1988**

## Description

### FIELD OF THE INVENTION

The present invention relates to a method of operation of a nuclear fuel reprocessing plant.

### DESCRIPTION OF THE RELATED ART

As an existent operation method for a reprocessing plant, there has been known, as described in Japanese Patent Laid-Open Publication JP-A 63-180894 (1988), a solvent extraction process for bringing a nitric acid solution containing nuclear fuel materials and fission products into contact with an organic solvent and separating the nuclear fuel materials to the side of an organic phase and the fission products to the side of an aqueous phase, in which the concentration of nitric acid in a solvent extraction device is measured and the concentration of nitric acid is controlled such that the concentrations of the aimed nuclides in the organic phase and the aqueous phase are controlled, to improve the quality of the products.

Further, there has been known, as described in Japanese Patent Laid-Open Publication JP-A 63-0 27796 (1988), a criticality control device for a reprocessing plant, in which the maximum value for the concentration of nuclear materials in a spent solvent is forecast based on composition conditions of a solution to be processed and operation conditions, to determine whether the maximum value of the concentration of the nuclear materials exceeds a limit value or not, for minimizing a discontinuous period of time in view of operational procedures or diluting the solution to be processed if the limit value is exceeded, in the control of criticality accidents which should never be caused.

Further, there has been known, as described in Japanese Utility Model Publication No. 34718/1991 and Japanese Utility Model Publication No. 34719/1991, a separation and recovery device for separating recovered uranium and natural uranium recovered in a reprocessing plant into enriched uranium and depleted uranium and recovering them, in which the concentration of uranium isotopes in enriched uranium is measured to control the amount of recovered uranium and natural uranium supplied, or the ratio of the recovered uranium to natural uranium supplied is controlled based on the result of calculation in a calculation control section, thereby improving the quality of enriched uranium or reducing the enriching cost, although they are not the reprocessing plant per se.

### SUMMARY OF THE INVENTION

Further, for the safety of the reprocessing plant, it has not been considered to employ such a process constitution and an equipment structure as having a sufficient margin to material corrosion or the like and, in particular, to control the operation conditions by recognizing the amount of materials as the main cause of malfunctions in the process.

As described above, the existent reprocessing plant or operation method for relevant equipment are mainly intended for improving the quality of products from the reprocessing plant or minimizing the discontinuous period of time in view of operational procedures in the control of the criticality accident that should never occur, and it has been premised to employ the process constitution and equipment structure having a sufficient margin regarding the safety of the reprocessing plant. Accordingly, there is a high possibility of the scale and construction cost of the reprocessing plant increasing unnecessarily to raise the problem of the cost of the plant construction increasing.

An aim of the present invention is to provide an operation method for a reprocessing plant capable of ensuring sufficient safety and reducing the scale and the construction cost of the reprocessing plant with light safety equipment by rationalizing the process constitution and the equipment structure.

According to the present invention there is provided a method of operation of a nuclear fuel reprocessing plant in which a solution of nuclear fuel from a nuclear reactor is subjected to reprocessing steps, including performing at least once the sequence of steps:-

(i) obtaining a value of the amount of a component in said solution from composition data relating to said solution being reprocessed from one of (a) the performance of the nuclear reactor in the production of the fuel in the solution and (b) measurement performed on the solution in the reprocessing plant,

(ii) evaluating from said value of the amount of said component the degree of risk of occurrence of a phenomenon liable to cause a malfunctioning of the plant, on the basis of a predetermined relationship between the amount of said component and the likelihood of occurrence of said phenomenon, and

(iii) controlling at least one device of said reprocessing plant so as to reduce the concentration in said solution of said component, thereby reducing said degree of risk when the evaluated degree of risk exceeds a predetermined level,

in which in a said sequence (I) of said steps (i) to (iii) said malfunctioning is clogging of a pipeline in said plant due to said component, said phenomenon is precipitation of a material containing said component, and said degree of risk of said phenomenon corresponds to the amount of precipitation of said material containing said component.

The composition data may concern all materials including cruds deposited on fuel assemblies that transfer to the reprocessing plant.

The malfunctioning may be clogging of pipelines due to precipitation caused by phosphoric acid.

An additional king of malfunctioning may concern evaporation of a radioactive nuclide, and in particular ruthenium.

A further kind of malfunctioning may be corrosion of equipment materials, and in particular caused by iron.

Quantitative recognition of a component as the main cause of plant malfunctioning and evaluation of the relation between the amount of the component and the plant malfunctioning provides a base for improving the control accuracy in plant operation and practising an adequate operation. The present inventors et al have made studies for solving the subject in the prior art and, as a result, have succeeded in quantitatively recognizing the components which are the main cause of the malfunctions in the reprocessing plant and analyzing the relation between the amount of the component and the plant malfunction and have accomplished the present invention.

In this way accidents and malfunctions in the reprocessing plant can be prevented and the equipment life of the reprocessing plant can be lengthened. Further, when the plant operation method based on the recognition and control of the components is introduced in the design stage for the reprocessing plant, it is possible to make the constitution of the reprocessing process and the equipment structure reasonable, thereby reducing the scale and the construction cost of the reprocessing plant.

Further, when the amount of a component which is the main cause of a malfunction in the plant operation is recognized based on composition data relating to the nuclear fuels taken out of the nuclear reactor, since the amount of equipment installed near the reprocessing solution is not increased as compared with the case of direct measurement of the reprocessing solution, it is advantageous from a view point of safety as well as in the inputting of data.

When the malfunction relates to evaporation of radioactive nuclides, for which the concentration of ruthenium as the malfunction-causing component is recognized, the relation between the concentration of ruthenium and the evaporation amount of ruthenium is evaluated and the operation conditions are controlled based on the result of the evaluation so as to reduce the evaporation amount of ruthenium in the process.

Further, when the malfunction relates to corrosion of equipment materials for which the concentration of the iron as the malfunction-causing component is recognized, the relation between iron and the corrosion amount of equipment materials is evaluated, so as to reduce the amount of corrosion of the equipment materials.

BRIEF DESCRIPTION OF THE DRAWINGS

Fig. 1 is a view for explaining an operation method for a reprocessing plant by a first example according to the present invention.

Fig. 2 is a view illustrating the relation between a burnup degree and a produced amount of Ru used for evaluating the relation between a trouble-causing material and a trouble in the first example.

Fig. 3 is a view illustrating the relation between a burnup degree and an amount of Ru transferred to a solution used for evaluation of the relation between the trouble-causing material and the trouble in the first example.

Fig. 4 is a view illustrating the relation between a sulfuric acid concentration, Ru purification factor, a pressure and a temperature used for evaluation of the relation between a trouble-causing material and s trouble in a first example.

Fig. 5 is a view illustrating an example of a device for practicing the operation method of the first example.

Fig. 6 is a view for explaining an operation method for a reprocessing plant in a second example according to the present invention.

Fig. 7 is a view illustrating a relation between an irradiation dose and a phosphoric acid concentration used for evaluation of the relation between a trouble-causing material and a trouble in the second example.

Fig. 8 is a view illustrating the relation between a phosphoric acid concentration and a produced amount of precipitates used for evaluation of the relation between a trouble-causing material and a trouble in the second example.

Fig. 9 is a view illustrating an example of a device for practicing the operation method of the second example.

Fig. 10 is a view for explaining an operation method for a reprocessing plant in a third embodiment according to the present invention.

Fig. 11 is a view for illustrating an example of a device for practicing the operation method in the third example.

DESCRIPTION OF THE PREFERRED EMBODIMENTS

Embodiments of the present invention will be described in conjunction with the drawings.

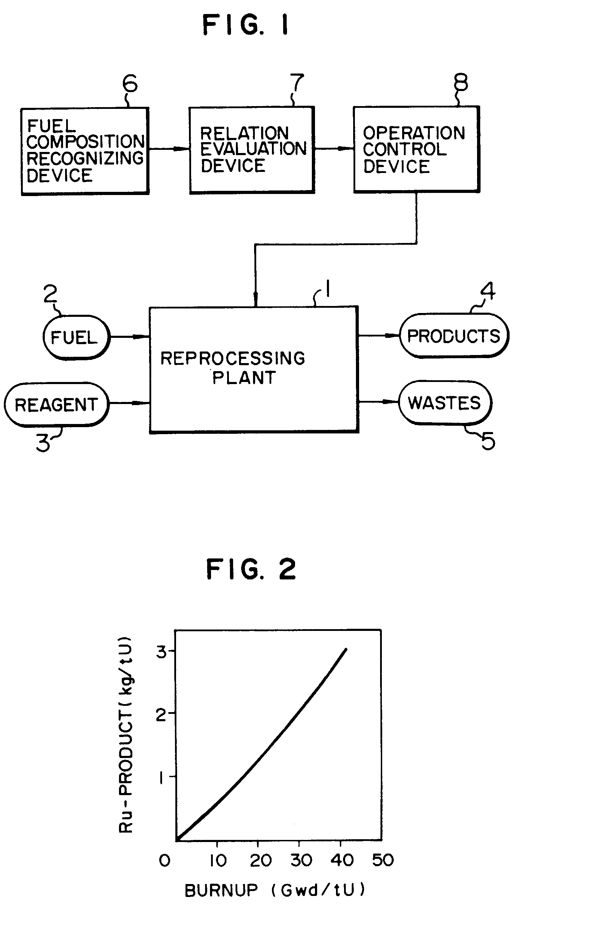

At first, a method of operating a reprocessing plant in a first embodiment according to the present invention will be described with reference to Figs. 1-4.

In Fig. 1, nuclear fuels taken out of a nuclear reactor, for example, spent nuclear fuels 2 and various kinds of reagents 3 such as nitric acid are introduced into a reprocessing plant 1, and U, Pu products 4 and wastes 5 are discharged in the course of the plant operation. Since the equipment of and processes in the reprocessing plant 1 are adapted such that they can cope with introduction of any type of fuels, the equipment has been operated so far under constant conditions with no particular consideration on the operation method for the reprocessing plant.

In this embodiment, there are provided a fuel composition recognizing device 6 to which data for the composition of spent nuclear fuels (constituent materials) introduced into the reprocessing plant 1 are inputted, and which recognizes the composition of the spent nuclear fuels based on the data and recognizes the existent amount of the component (hereinafter referred to as the material or the trouble-causing material or the dominant material) as the main cause of the malfunction (hereinafter referred to as the trouble) in the plant operation, the relation evaluation device 7 for evaluating the relation between the existent amount of the trouble-causing material and the trouble, and an operation control device 8 for operating relevant equipment and controlling the operation conditions based on the result of the evaluation of the relation so as to reduce the effect of the trouble-causing material on the reprocessing plant 1.

The fuel composition recognizing device 6 is a device for recognizing the amount of fuel constituent materials also including cruds deposited on fuel assemblies substantially accurately. The amount of the fuel constituent materials can be recognized, for example, by calculation from an irradiation history by using an evaluation code for nuclear reaction yield, or by actually measuring the fuel composition using a radiation detector or the like.

The relation evaluation device 7 is a device for evaluating the relation, for example, between a trouble such as evaporation of radioactive nuclides, environmental release of the radioactive nuclides, clogging in pipelines or corrosion of equipment materials and the existent amount of the dominant material for the trouble in the fuel constituent materials. By evaluating and recognizing the relation, conditions leading to a trouble and conditions not leading to a trouble can be distinguished definitely.

The operation control device 8 is a device for controlling relevant equipment such as valves or a heating device for controlling the operation conditions, based on the result of the evaluation of the relation, so as to restrict the amount of the dominant material, in order not to lead to the trouble. The plant can be operated under optimal conditions so as not to cause a plant trouble by this device.

The plant can be operated under the optimal conditions by recognizing the constituent materials of the spent fuels and evaluating the relation between the amount of the trouble-causing material and the plant trouble by the three kinds of the devices described above.

As an example, the case in which a plant trouble is evaporative release of radioactive nuclides will be described. Spent fuels include more than 30 kinds of elements and it has been made clear as a result of studies that dominant materials regarding evaporation, except for inherently volatile materials (for example, iodine, carbon-carbon dioxide gas, hydrogen-steam and, rare gases), are ruthenium (Ru), technetium (Tc) and cesium (Cs), particularly Ru.

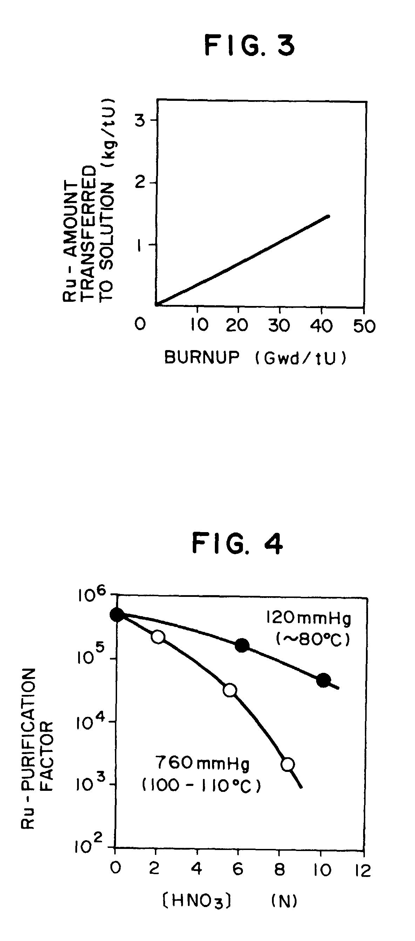

At first, the amount of Ru contained in the spent fuels is recognized by the fuel composition recognizing device 6. The amount of Ru can be determined also by measuring emitted y-rays by a radiation detector and it can be determined by calculation based on the irradiation history of the fuels using an evaluation code for nuclear reaction yield. Fig. 2 shows an example for the result of calculation. Fig. 2 shows the amount of Ru formed relative to a burnup in the case of an initial enrichment degree of fuels of 3% by weight and cooling time of 4 hours in an example of a boiling water reactor. The amount of Ru formed increases as the burnup is increased. Further, it has been known that Ru is present as an insoluble component not dissolved in nitric acid in the fuels. Fig. 3 shows a result of determining the amount of Ru in the fuels that is dissolved in nitric acid and transfers to a solution. The amount of Ru transferring to the solution also increases as the burnup increases. Based on the data in Fig. 3, the amount of Ru in the nitric acid solution can be determined if the burnup of the spent fuels to be reprocessed is found. It is recognized so far by the fuel composition recognizing device 6 and the amount of Ru in the reprocessing solution is determined clearly in the process in which evaporation causes a problem.

Next, the relation between the amount of Ru and evaporation is evaluated also inclusive of various environmental conditions by the relation evaluation device 7. As a result of the study, it has been found that the evaporation amount of Ru depends on the Ru concentration, temperature (pressure) and the concentration of nitric acid. Fig. 4 shows such relations. The evaporation amount of Ru is represented by a purification factor, that is, a value (ratio) of the Ru concentration in distillates (volatilizes) relative to the Ru concentration in the remaining solution. The evaporation amount of Ru increases as the concentration of the nitric acid increases and also as the temperature or the pressure rises. From the relation as shown in Fig. 4, the extent of distillation from the amount of Ru caused to flow into the process can be evaluated by the relation evaluation device 7. The distillation amount of Ru can be calculated, for example, as 1 (kg/tU) $\times$ 1/$10^4$ = $10^{-4}$ (Kg/tU) assuming the burnup degree of the spent fuels to be reprocessed as 20 GWd/tU, the concentration of nitric acid as 7 N, the temperature as 100°C and the pressures as 76 mmHg.

Further, optimal plant operation conditions are determined based on the above-mentioned relation by the operation control device 8. The aimed control value for the evaporative releasing amount of radioactive nuclides (gaseous waste releasing amount) is 150 MBq/tU in the case of β, γ nuclides other than $^{85}$Kr, $^3$H, $^{14}$C, $^{129}$I and $^{131}$I, and the releasing amount as a solution (liquid wastes releasing amount) is 875 MBq/tU for $\beta$, $\gamma$ nuclides other than $^3$H, $^{129}$I and $^{131}$I. It is necessary to restrict them to about 0.03 mg/tU and about 0.17 mg/tU, respectively, in order to reduce contribution of Ru to less than 1/10 of the entire $\beta$, $\gamma$ nuclides. The operation conditions for this purpose are determined. When the evaporative transferring amount of Ru in the entire reprocessing process is evaluated and if there is no possibility of the aimed control value for the releasing amount being exceeded, there is no particular requirement for changing the operation conditions. If there is a possibility of the aimed control value being exceeded, the most dominant process is selected and conditions thereof are changed. For instance, as can be deduced from Fig. 4, the evaporation amount of Ru is decreased if the temperature (pressure) or nitric acid concentration is lowered.

In this way, release (leakage) of Ru, for instance, from the plant is prevented by this embodiment, evaluation and control is provided similarly also for elements other than Ru. This applies to other troubles.

As described above, by the operation method for the reprocessing plant in this embodiment, sufficient safety is ensured and plant troubles are prevented, with no installation of heavy equipment based on an excessive consideration for the safety of plant equipment and processes. As a result, since the process is simplified and the scale of the plant is reduced, the plant construction cost is reduced drastically.

Further, the data inputted to the fuel composition recognizing device 6 are not measured values but are data for the composition of spent nuclear fuels (constituent materials) to be introduced into the reprocessing plant 1 and, actually, data are inputted through a floppy disk in which irradiation and cooling history data of fuels to be reprocessed are recorded (to be described later). Accordingly, since the number of devices installed near the reprocessing solution is not increased as compared with the case of direct measurement of the reprocessing solution, it is advantageous from a view point of safety also in the inputting of data.

Although the embodiment described above is shown as being divided into three types of devices, that is, the fuel composition recognizing device 6, the relation evaluation device 7 and the operation control device 8, it is not necessarily required to do so definitely, but the present invention can be executed with no troubles so long as the function of the three types of the devices is fulfilled and, for example, one device will suffice.

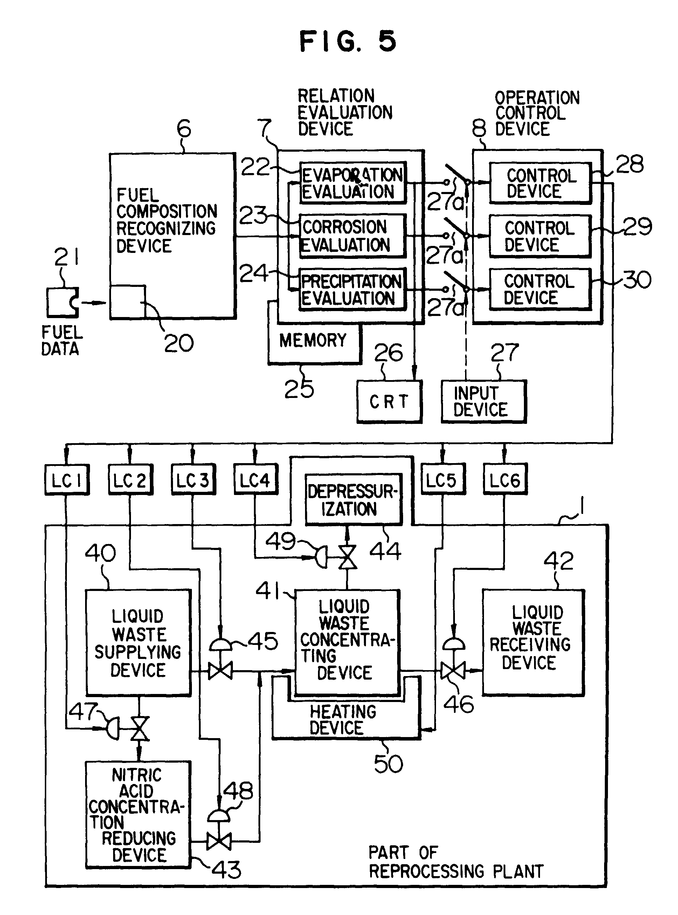

Next, an embodiment of a device for practicing the operation method as described above will be described with reference to Fig. 5. In Fig. 5, the fuel composition recognizing device 6 has a floppy disk drive 20 and recognizes the composition of fuels by reception of a floppy disk 21 in the disk drive to record data for irradiation and cooling history of fuels to be reprocessed. The recognized fuel composition data is transferred to the relation evaluation device 7.

The relation evaluation device 7 comprises an evaporation evaluation device 22, a corrosion evaluation device 23 and a precipitation evaluation device 24, and the evaluation devices 22, 23 and 24 extract only the dominant data for evaporation, corrosion and precipitation in the fuel composition data and evaluate the extent of evaporation, corrosion and precipitation. The evaporation evaluation device 22 evaluates distillation by reference to the data as shown in Figs. 2, 3 and 4. The corrosion evaluation device 23 and the precipitation evaluation device 24 evaluate corrosion and precipitation by reference to the data as will be explained in the embodiment described later. The data are stored in a memory 25 such that data are updated and the newest data can be stored as necessary. Further, a CRT 26 is disposed such that the operator can visually confirm the relation between evaporation, corrosion and precipitation on the screen of CRT 26.

As a result of the evaluation of the relation, if there is a possibility of an aimed evaporation amount, corrosion amount or precipitation amount being exceeded, a signal is transferred to the operation control device 8. Also, the operator can evaluate the relation on the screen of CRT 26, judge the necessity of control and a control method, and can send the signal, using an input device 27 to the operation control device 8. Selection of the relation evaluation device 7 or the input device 27 is made by the operator's manipulation of the switches 27a.

The operation control device 8 has three control devices 28, 39 and 30 corresponding to the evaporation evaluation device 22, the corrosion evaluation device 23 and the precipitation evaluation device 24. A signal from the control device 28 is transmitted by way of local control devices LC1, LC2, LC3, LC4, LC5 and LC6 to specified equipment in the reprocessing plant 1, to control the specified equipment such that the evaporation amount does not exceed an allowable amount. This applies also to the control devices 29 and 30 and the specified equipment is controlled such that the corrosion amount or the precipitation amount does not exceed the acceptable value.

Fig. 5 shows only an equipment constitution of the reprocessing plant 1 directed to a liquid waste concentrating step and including a liquid waste supplying device 40, a liquid waste concentrating device 41, a liquid waste receiving device 42, a nitric acid concentration reducing device 43, a depressurization device 44 and valves 45, 46, 47, 48 and 49 for controlling transfer of fluids between the devices. The liquid waste concentrating device 41 has a heating device 50.

When it is judged that evaporation control is necessary by the evaporation evaluation device 22 in the relation evaluation device 7, several evaporation controlling methods are examined in comparison. As a method of controlling and suppressing evaporation of ruthenium (Ru) in the liquid waste concentrating device 41, reduction of the nitric acid concentration in the liquid wastes or lowering of the temperature in the course of concentration is considered. In the case of reducing the nitric acid concentration in the liquid wastes, a signal is transmitted to the local control devices LC1 to LC3. The local control device LC3 closes the valve 45 to interrupt transfer of the liquid wastes from the liquid waste supplying device 40 to the liquid wastes concentrating device 41, and the local control device LC1 opens the valve 47 to transfer the liquid wastes to the nitric acid concentration reducing device 43. The nitric acid concentration reducing device 43 reduces the nitric acid concentration in the denitrating or neutralizing operation, and the local control device LC2 opens the valve 48 to transfer the liquid wastes to the liquid waste concentrating device 41.

When the temperature at which the liquid waste is concentrated is lowered, the local control device LC4 operates the depressurization device 44 or the valve 49 for the depressurization device to lower the pressure or the local control device LC5 lowers the output from the heating device 50. By conducting one or both of those operations simultaneously, the temperature at which the liquid waste is concentrated can be lowered to suppress evaporation of radioactive nuclides such as Ru.

A further control method is to restrict the degree of concentration to a certain extent. This may be done by opening the valve 46 through the local control device LC6 to transfer the liquid waste in a less concentrated state to the liquid waste receiving device 42.

According to this embodiment, evaporation of the radio active nuclides is suppressed to a necessary and sufficient level adequately and reasonably by the fuel composition recognizing device 6, the relation evaluation device 7, the operation control device 8 and the local control devices LC1 - LC6.

Also for corrosion and precipitation, corrosion and precipitation can be suppressed by controlling relevant equipments in a similar manner.

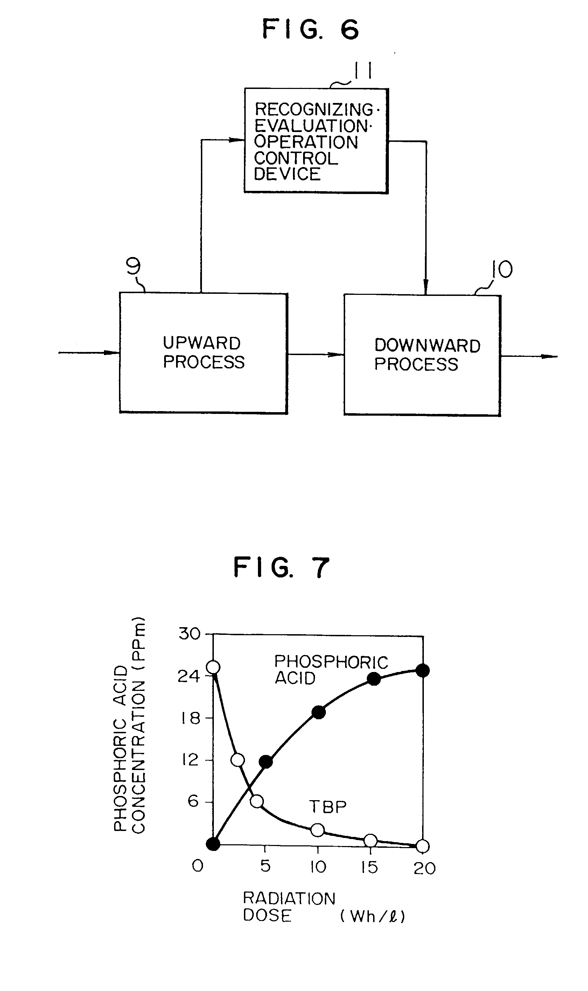

An operation method for a reprocessing plant by a second embodiment according to the present invention will be described with reference to Figs. 6 to 8. In this example, a trouble-causing material is evaluated in the prestage of one process in a reprocessing plant and the operation conditions for the process are controlled.

The reprocessing plant includes a number of connected processes. As a portion of such processes, a fluid processed in an upward (upstream side) process 9 of the two connected processes is further processed in a downward (downstream side) process 10. In the conventional method, an operation method and conditions for the downward process were determined irrespective of the upward process 9.

In this embodiment, the behavior of the material causing the trouble in the downward process 10 and the amount of the material to be transferred to the downward process 10 are recognized by a recognizing-evaluation-operation control device 11 on the basis of the composition data for a reprocessing solution in the upward process 9. The influence of the amount and the form of the material on the downward process 10 are evaluated by the identical device 11, and the operation conditions of the downward process 10 are controlled also by the identical device 11 such that the influence of the material on the downward process 10 is reduced to less than an acceptable amount. By installing and properly operating the recognizing-evaluation-operation control device 11 in this way, the downward process 10 is operated adequately with no troubles.

As an example, the case in which the plant trouble is fluid transfer deficiency or pipeline clogging due to deposition of precipitates will be described. Fluids in the reprocessing process contain more than 30 kinds of elements. It has been found as a result of studies that dominant materials for the precipitative deposition are phosphoric acid (abbreviated as P), molybdenum (Mo), zirconium (Zr), iron (Fe), barium (Ba), nitrate radical, particularly P. As a typical example of the process, the upward process 9 is a codecontamination process and the downward process 10 is a high level liquid waste concentration process.

At first, the recognizing-evaluation-operation control device 11 recognizes the behavior and the amount of P contained in a fluid in the upward process 9. P is formed mainly by decomposition of tributyl phosphate (TBP) as an extraction solvent used in the reprocessing process with radiation, nitric acid and/or heat. Fig. 7 shows the amount of phosphoric acid formed by radiation. The formation is a result of radiation doses after dissolution of TBP in nitric acid and measurement of concentration of TBP and phosphoric acid (P) in the nitric acid solution. As can be seen from the Figure, TBP decreases and P increases as the radiation dose increases. In an actual process, since more TBP transfers into nitric acid due to contact with TBP, P is gradually accumulated in nitric acid. Such behavior of contact, transfer and decomposition is evaluated to recognize the amount of P caused to flow into the downward process 10.

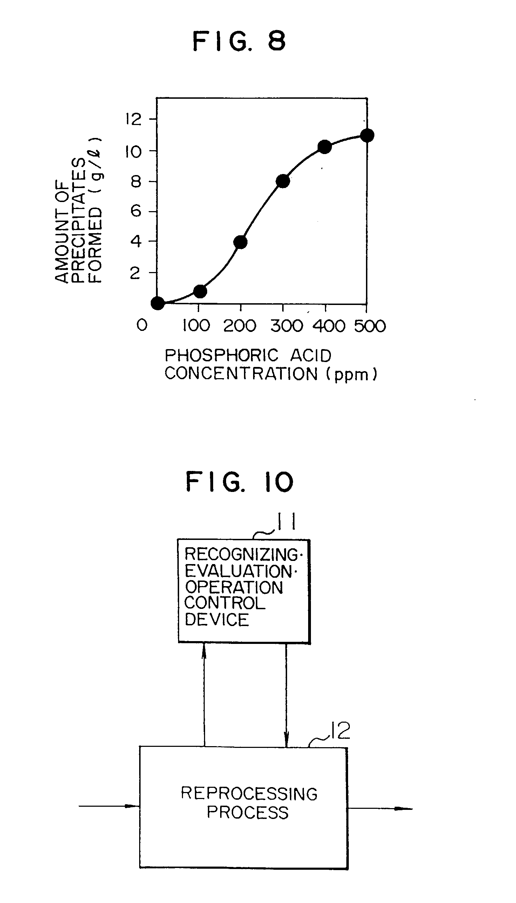

Then, the recognizing-evaluation-operation control device 11 evaluates the relation between the amount of precipitates formed and the amount of P in the downward process 10. Fig. 8 shows the dependence of the amount of precipitates on the amount of P. Fig. 8 shows data obtained in the case of concentrating liquid wastes containing fission products at an initial concentration of nitric acid of 3 N, in which the amount of precipitates formed increases as the phosphoric acid concentration increases. Such relation has been found as a result of a study. The effect of the predominant material P on the formation of the precipitates can be evaluated.

Further, the recognizing-evaluation-operation control device 11 controls the operation method and the conditions of the downward process so as to avoid the troubles. The amount of precipitation has to be restricted in consideration of pipeline clogging in the transfer of the liquid wastes. Assuming that the amount of precipitates formed has to be restricted to less than 8 g/liter, it is necessary to restrict the P concentration to less than 300 ppm. In this case, measures are considerable which include suppression of radioactive irradiation, suppression of P concentration from increasing (reduction of concentration degree), removal of P or enhancing the slurry transfer performance. Further, the temperature, the nitric acid concentration or the like also has influences the amount of precipitation. Troubles caused in the transfer of the solution can be prevented by selecting appropriate measures and optimizing the operation of the downward process 10.

As described above, in this embodiment, clogging in the process pipelines is prevented. Similar evaluation and control are also provided for other elements than P. Other troubles are similarly prevented.

As described above, according to this embodiment, sufficient safety is ensured and plant troubles are prevented without installation of heavy equipment due to excessive consideration for the safety of the plant equipment and the processes. As a result, since the processes are simplified and the scale of the plant is reduced and the plant construction cost is greatly reduced.

In the embodiment described above, the trouble-causing material is recognized in the process one step before, but it may be recognized (evaluated or measured) in the course of transfer of a fluid from the preceding process to the succeeding process, or it may be recognized in the process two or more steps before, which provides a similar effect.

Further, in the embodiment described above, one upward process and one downward process are disposed but even one or both of them which comprise a plurality of processes can produce effects similar to those produced by the former case. In this case, the recognizing-evaluation-operation control device 11 may get information from a plurality of upward processes, perform recognition and evaluation and determine and control the operation conditions for a plurality of downward processes.

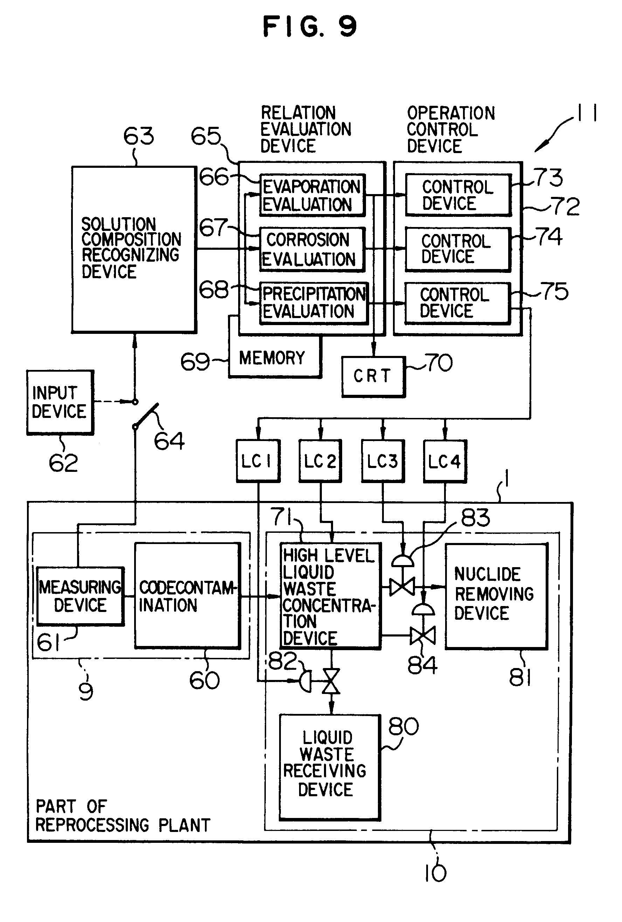

Next, an embodiment of a device for practicing the operation method described above will be described with reference to Fig. 9. In this embodiment, the solution composition in a codecontamination device in the reprocessing process is recognized and formation of precipitates is controlled and suppressed if necessary.

In Fig. 9, the solution composition in a codecontamination device 60 in the upward process 9 is recognized by a measuring device 61 or by the solution composition recognizing device 63 on the basis of the spent fuel composition, operation conditions for codecontamination or the like input through an input device 62. Inputting the spent fuel composition through the input device 62 may be conducted by insertion of a floppy disk in which data for irradiation and cooling history of fuels to be reprocessed are recorded into a floppy disk drive in the same manner as in the example shown in Fig. 5. In the case of the data being input through the floppy disk, it is advantageous from a view point of safety as compared with the case of direct measurement of a reprocessing solution as described above. Selection of the measuring device 61 or the input device 62 is made by the operator's manipulation of a switch 64. Further, the recognized solution composition data is transferred to a relation evaluation device 65.

The relation evaluation device 65 comprises, in the same manner as the embodiment shown in Fig. 5, an evaporation evaluation device 66, a corrosion evaluation device 67 and a precipitation evaluation device 68. The precipitation evaluation device 68 recognizes the amount of P transferred to a high level liquid waste concentration device 71 in the downward process 10 of the codecontamination device 60 on the basis on the solution composition data from the solution composition recognizing device 63 and the data shown in Fig. 7 stored in a memory 69 and, further, evaluates the amount of precipitates formed in a high level liquid waste concentration device 71 on the basis of the data shown in Fig. 8. The evaporation evaluation device 66 determines the amount of Ru transferred to the high level liquid waste concentration device 71 and evaporation amount of Ru with reference to the data as already explained for the first embodiment. The corrosion evaluation device 67 determines corrosion amount of Fe transferred to the high level liquid waste concentration device 71 by reference to the data as explained in the embodiment to be detailed later to evaluate the evaporation and the corrosion respectively. Further, the operator can visually confirm the relation to evaporation, corrosion and precipitation on the screen of CRT 70. As a result of evaluation of the relation, if there is a possibility of a target evaporation amount, a corrosion amount or precipitation amount being exceeded, a signal is transferred to the operation control device 72.

The operation control device 72 has three control devices 73, 74 and 75 corresponding to the evaporation evaluation device 66, the corrosion evaluation device 67 and the precipitation evaluation device 68. A signal from the control device 75 is transmitted by way of local control devices LC1, LC2, LC3 and LC4 to specified equipment in the downward process 10 to control the specified equipment such that the amount of precipitation does not exceed an allowable amount. This applies also to the control devices 73, 74 and the specified equipment is controlled such that the evaporation amount and the corrosion amount do not exceed allowable amounts.

In Fig. 9, the equipment constitution in the downward process 10 comprises, in addition to the high level liquid waste concentration device 71, a liquid waste receiving device 80, a nuclide removing device 81 and valves 82, 83 and 84 for controlling the transfer of fluids between the devices.

If it is judged by the precipitation evaluation device 68 that the amount of precipitates formed exceeds an allowable amount, the amount of precipitates formed is controlled by the control device 75 and the local control devices LC1 - LC4. For example, a signal is transmitted to the local control devices LC1 and LC2 to open the valve 82, thereby transferring a portion of the liquid wastes in the high level liquid wastes concentration device 71 to the liquid wastes receiving device 80 and suppressing the concentration of the liquid wastes to an appropriate level to suppress the amount of the precipitates formed. Further, a signal is transmitted to the local control devices LC3 and LC4 to open the valves 83 and 84, thereby removing phosphoric acid as the dominant nuclides for the formation of precipitates in the liquid wastes by the nuclide removing device 81, and returning the liquid wastes after the removal to the high level liquid wastes concentration 71 to suppress the amount of the precipitates formed. While other several methods (procedures) may be considered, it is possible to suppress the amount of precipitates formed by any one of the procedures or a combination of a plurality of such procedures.

According to this embodiment, the amount of precipitates formed is suppressed to a necessary and sufficient level adequately and reasonably by the solution composition recognizing device 63, the relation evaluation device 65, the operation control device 72 and the local control devices LC1 - LC4.

Also, for evaporation and corrosion, evaporation and corrosion can be suppressed by controlling the relevant equipment in a similar manner.

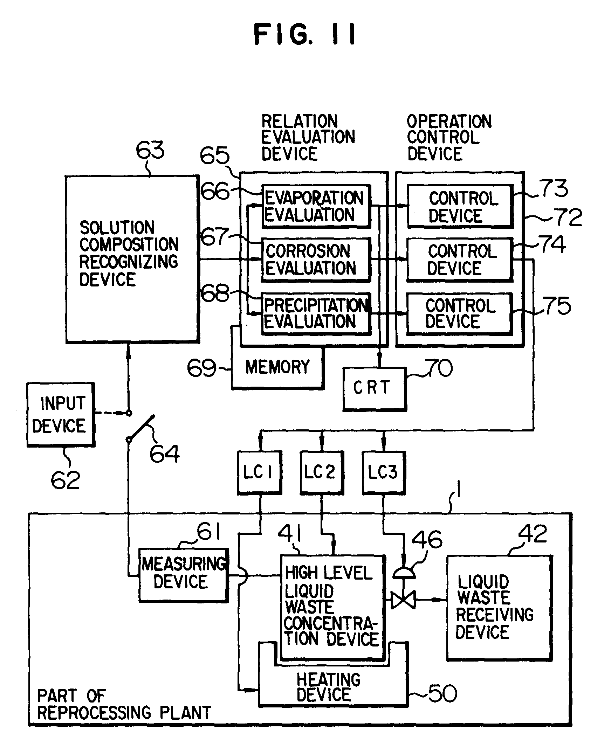

An operation method for a reprocessing plant by a third embodiment according to the present invention will be explained with reference to Figs. 10 and 11. In this example, an existent amount of a trouble-causing material is recognized in the identical process and the operation conditions for the process are determined.

In Fig. 10, on the basis of the composition data for a reprocessing solution in a process 12 as a portion of a reprocessing plant, behavior and amount of a material as the main cause of the trouble in the identical process 12 are recognized by a recognizing-evaluation-operation control device 11. The effect of the amount and the form of the material on the process 12 is evaluated by the identical device 11. The operation conditions are controlled also by the identical device 11 such that the effect of the material on the process 12 is reduced to less than an allowable amount. In order to achieve those operations, the recognizing-evaluation-operation control device 11 is installed and properly operated, and hence the process 12 is operated appropriately with no troubles.

As an example, the case where the plant trouble is corrosion of equipment materials will be described. It has been found as a result of studies that the dominant materials for the material corrosion in a fluid in a reprocessing process are iron (Fe), and high valence material such as octavalent ruthenium (Ru) or hexavalent chromium (Cr), particularly Fe. A typical example of the process is that the process 12 is a high level liquid wastes concentration process.

At first, the recognizing-evaluation-operation control device 11 recognizes the concentration (amount) of Fe contained in the fluid in the process 12. Fe is mainly derived from cruds deposited to clad tubes of fuel assemblies or the like in a nuclear reactor and dissolution (corrosion) of equipment materials.

Then, the recognizing-evaluation-operation control device 11 evaluates the correlation between a Fe concentration and a corrosion amount (corrosion rate) in the process 12. It has been found that the corrosion amount increases in proportion with the Fe concentration to be not negligible at a level higher than 15 g/liter. Accordingly, it is necessary to restrict the Fe concentration to less than 15 g/liter, preferably, to less than 10 g/liter and, more preferably, to less than 5 g/liter. The recognizing-evaluation-operation control device 11 conducts evaluation in comparison with such an adequate concentration.

Further, the recognizing-evaluation-operation control device 11 controls the operation conditions of the process 12 so as to avoid troubles. A conceivable method of keeping the Fe concentration low is, concretely, to keep the liquid concentration factor low, and to remove Fe. To reduce the corrosion, general conceivable measures are to lower the temperature and concentration of nitric acid. Troubles with the corrosion are avoided by selection of a proper one of the measures and optimization of the operation of the process 12.

Further, a method of removing iron from spent fuel assemblies to reduce the corrosion before reprocessing is to input fuel composition data through a floppy disc in which data for irradiation and cooling history of fuels to be reprocessed are recorded, as in the first embodiment.

In this way, this embodiment serves to prevent, for example, an increase in the corrosion of equipment materials and troubles due to the corrosion. Evaluation and control of other elements than Fe can be conducted in a similar manner. Further, this applies to other troubles.

As described above, according to this embodiment, sufficient safety is ensured and plant troubles are prevented without installation of heavy equipment based on excessive consideration for the safety of the plant equipment and processes. As a result, since the processes are simplified and the plant scale is reduced, the plant construction cost is greatly reduced.

Next, an embodiment of a device for practicing the operation will be described with reference to Fig. 11. In Fig. 11, members equivalent with those shown in Figs. 5 and 9 are identified by the same reference numeral. In this embodiment, a solution composition in a high level liquid wastes concentration equipment in a reprocessing process is recognized, corrosion of equipment materials is controlled and suppressed, if necessary.

In Fig. 11, a solution composition in a high level liquid wastes concentration device 41 is recognized by a measuring device 61 or by a solution composition recognizing device 63 on the basis of the composition of spent fuels and the operation conditions of the high level liquid waste concentration input through an input device 62. Data on the composition of the spent fuels can be inputted by an input device 62 like the embodiment shown in Fig. 5 through insertion of a floppy disk having data on irradiation and cooling history of fuels to be reprocessed into a floppy disk drive. When data is inputted through the floppy disk, it is advantageous from a view point of safety as compared with the case of measuring the reprocessing solution as described preciously. Selection of the measuring device 61 or the input device 62 is made by operator's manipulation of a switch 64. The recognized data for solution composition are transferred to a relation evaluation device 65.

A precipitation evaluation device 68 of the relation evaluation device 65 evaluates the corrosion amount of equipment materials in a high level liquid waste concentration device 41 on the basis of the data from the solution composition recognizing device 63 and data concerning material corrosion stored in a memory 69. An evaporation evaluation device 66 and a precipitation evaluation device 67 evaluate evaporation and precipitation by reference to the data as explained in the previous example. If there is a possibility of the aimed evaporation amount, corrosion amount or precipitation amount being exceeded as a result of the evaluation of the relationship, a signal is transferred to an operation control device 72.

If it is judged in the corrosion evaluation device 67 that the corrosion amount exceeds an allowable value, the operation control device 72 restricts the corrosion amount from a control device 74 by way of local control devices LC1, LC2 and LC3. The local control device LC1 controls a heating device 50 to lower the temperature of concentration of the high level liquid waste to a necessary and sufficient temperature. The local control device LC2 lowers the temperature by lowering the pressure of the high level liquid waste at the time of its concentration to a necessary and sufficient level. Further, the local control device LC3 opens a valve 46 to transfer the high level concentration liquid wastes to a liquid waste receiving device 42 before the concentration degree of the high level liquid wastes, that is, the iron concentration is increased. The corrosion amount of the equipment materials can be suppressed by any one of those procedures or a combination of such procedures. This applies to control devices 73 and 75, and specified equipment are controlled such that the evaporation amount and precipitation amount do not exceed allowable amounts.

As has been described above, according to this embodiment, the corrosion amount of equipment materials is suppressed to a necessary and sufficient level appropriately and reasonably by the solution composition recognizing device, the relation evaluation device, the control device and the local control devices.

Also, for evaporation and precipitation, evaporation and precipitation are suppressed by controlling the relevant equipment in a similar manner.

According to the present invention, sufficient safety is ensured and plant troubles are prevented without installation of heavy equipments due to excess consideration for the safety of the reprocessing plant equipment and reprocessing processes. As a result, since the processes are simplified and the plant scale is diminished, the cost of the plant construction is reduced greatly.

**Claims**

1. A method of operation of a nuclear fuel reprocessing plant in which a solution of nuclear fuel from a nuclear reactor is subjected to reprocessing steps, including performing at least once the sequence of steps:-

   (i) obtaining a value of the amount of a component in said solution from composition data relating to said solution being reprocessed from one of (a) the performance of the nuclear reactor in the production of the fuel in the solution and (b) measurement performed on the solution in the reprocessing plant,
   (ii) evaluating from said value of the amount of said component the degree of risk of occurrence of a phenomenon liable to cause a malfunctioning of the plant, on the basis of a predetermined relationship between the amount of said component and the likelihood of occurrence of said phenomenon, and
   (iii) controlling at least one device of said reprocessing plant so as to reduce the concentration in said solution of said component, thereby reducing said degree of risk when the evaluated degree of risk exceeds a predetermined level,

   in which in a said sequence (I) of said steps (i) to (iii) said malfunctioning is clogging of a pipeline in said plant due to said component, said phenomenon is precipitation of a material containing said component, and said degree of risk of said phenomenon corresponds to the amount of precipitation of said material containing said component.

2. A method according to claim 1, in which in said sequence (I) said component is phosphoric acid, molybdenum, zirconium, iron, barium or $NO_3^-$.

3. A method according to claim 1 or 2 including a further said sequence (II) of said steps (i) to (iii) in which said malfunctioning is caused by corrosion of a constituent material of said plant, said phenomenon is the corrosion of said constituent material of said plant, and said degree of risk of said phenomenon corresponds to the amount of the corrosion of said constituent material of said plant.

4. A method according to claim 3, in which in said sequence (II) said component is iron, octavalent ruthenium or hexavalent chromium.

5. A method according to any one of claims 1 to 4 including a further said sequence (III) of said steps (i) to (iii) in which said malfunctioning is leakage of at least one volatilized radioactive nuclide, said phenomenon is volatilization of said radioactive nuclide and said degree of risk of said phenomenon corresponds to the amount of volatilization of said radioactive nuclide.

6. A method according to claim 5, in which said radioactive nuclide is ruthenium, technetium or caesium.

**Patentansprüche**

1. Verfahren zum Betreiben einer Wiederaufbereitungsanlage für Kernbrennstoff, in der eine Kernbrennstoff-Lösung aus einem Kernreaktor Wiederaufbereitungsschritten unterzogen wird, umfassend die zumindest einmalige Durchführung der Schrittabfolge:

(i) Erhalt eines Werts für die Menge einer Komponente in der Lösung aus Daten über die Zusammensetzung, die sich auf die wiederaufzubereitende Lösung beziehen, aus einem von (a) der Leistung des Kernreaktors bezüglich der Produktion des Brennstoffs in der Lösung und (b) der Messung, die an der Lösung in der Wiederaufbereitungsanlage durchgeführt wird, (ii) Ermittlung des Risikogrades für das Auftreten eines Phänomens, das die Gefahr birgt, eine Fehlfunktion der Anlage zu verursachen, aus dem Wert für die Menge der Komponente auf Basis einer vorbestimmten Beziehung zwischen der Menge der Komponente und der Auftrittswahrscheinlichkeit des Phänomens, und (iii) Steuern zumindest einer Einrichtung der Wiederaufbereitungsanlage, um die Konzentration der Komponente in der Lösung zu verringern, wodurch der Risikograd verringert wird, wenn der ermittelte Risikograd ein vorbestimmtes Maß übersteigt,

worin in der Abfolge (I) der Schritte (i) bis (iii) die Fehlfunktion im Verstopfen einer Rohrleitung in der Anlage aufgrund der Komponente besteht, wobei das Phänomen das Ausfallen eines Materials ist, das die Komponente enthält, und der Risikograd des Phänomens der ausgefallenen Menge des die Komponente enthaltenden Materials entspricht.

2. Verfahren nach Anspruch 1, worin in Abfolge (I) die Komponente Phosphorsäure, Molybdän, Zirkonium, Eisen, Barium oder $NO_3^-$ ist.

3. Verfahren nach Anspruch 1 oder 3, das eine weitere solche Abfolge (II) der Schritte (i) bis (iii) umfaßt, bei der die Fehlfunktion durch Korrosion eines Materialbestandteils der Anlage verursacht wird, wobei das Phänomen die Korrosion des Materialbestandteils der Anlage ist und der Risikograd des Phänomens dem Ausmaß der Korrosion des Materialbestandteils der Anlage entspricht.

4. Verfahren nach Anspruch 3, bei dem in Abfolge (II) die Komponente Eisen, achtwertiges Ruthenium oder sechswertiges Chrom ist.

5. Verfahren nach einem der Ansprüche 1 bis 4, das eine weitere solche Abfolge (III) der Schritte (i) bis (iii) umfaßt, wobei die Fehlfunktion der Austritt zumindest eines verflüchtigten Radionuklides ist, wobei das Phänomen die Verflüchtigung des Radionuklides ist und der Risikograd des Phänomens dem Ausmaß an Verflüchtigung des Radionuklides entspricht.

6. Verfahren nach Anspruch 5, bei dem das Radionuklid Ruthenium, Technetium oder Caesium ist.

**Revendications**

1. Procédé de conduite d'une installation de retraitement de combustible nucléaire dans laquelle une solution de combustible nucléaire provenant d'un réacteur nucléaire est soumise à des étapes de retraitement, comportant la mise en oeuvre au moins une fois de la séquence d'étapes consistant à :

(i) obtenir une valeur de la quantité d'un constituant dans ladite solution à partir de données de composition concernant ladite solution retraitée à partir d'une valeur parmi (a) la performance du réacteur nucléaire dans la production du combustible dans la solution et (b) une mesure effectuée sur la solution dans l'installation de retraitement, (ii) évaluer à partir de ladite valeur de la quantité dudit constituant le degré du risque d'apparition d'un phénomène susceptible de provoquer un mauvais fonctionnement de l'installation, sur la base d'une relation prédéterminée entre la quantité dudit constituant et la probabilité d'apparition dudit phénomène, et

(iii) commander au moins un dispositif de ladite installation de retraitement de manière à réduire la concentration dudit composant dans ladite solution, en réduisant ainsi le degré de risque lorsque le degré de risque évalué dépasse un niveau prédéterminé,

dans lequel dans ladite séquence (I) constituée desdites étapes (i) à (iii) ledit mauvais fonctionnement est un bouchage d'une tuyauterie de ladite installation dû audit constituant, ledit phénomène est une précipitation d'un matériau contenant ledit constituant et ledit degré de risque dudit phénomène correspond à la quantité de précipitation dudit matériau contenant ledit constituant.

2. Procédé selon la revendication 1, dans lequel dans ladite séquence (I) ledit constituant est l'acide phosphorique, le molybdène, le zirconium, le fer, le baryum ou $NO_3^-$.

3. Procédé selon la revendication 1 ou 2, comportant une autre dite séquence (II) constituée desdites étapes (i) à (iii), dans laquelle ledit mauvais fonctionnement est provoqué par la corrosion d'un matériau constitutif de ladite installation, ledit phénomène est la corrosion dudit matériau constitutif de ladite installation, et ledit degré de risque dudit phénomène correspond à la quantité de corrosion dudit matériau constitutif de ladite installation.

4. Procédé selon la revendication 3, dans lequel dans ladite séquence (II) ledit constituant est le fer, le ruthénium octovalent ou le chrome hexavalent.

5. Procédé selon l'une quelconque des revendications 1 à 4, comportant une autre dite séquence (III) constituée desdites étapes (i) à (iii), dans laquelle ledit mauvais fonctionnement est une fuite d'au moins un nucléide radioactif volatilisé, ledit phénomène est la volatilisation dudit nucléide radioactif et ledit degré de risque dudit phénomène correspond à la quantité de volatilisation dudit nucléide radioactif.

6. Procédé selon la revendication 5, dans lequel ledit nucléide radioactif est le ruthénium, le technétium ou le césium.

# FIG. 1

# FIG. 2

# FIG. 3

# FIG. 4

# FIG. 5

# FIG. 6

# FIG. 7

## F I G. 8

AMOUNT OF PRECIPITATES FORMED ( g / ℓ )

12
10
8
6
4
2

0   100  200  300  400  500

PHOSPHORIC ACID
CONCENTRATION ( ppm )

## F I G. 10

11

RECOGNIZING·
EVALUATION·
OPERATION
CONTROL
DEVICE

12

REPROCESSING
PROCESS

16

# FIG. 9

# FIG. 11

RELATION
EVALUATION
DEVICE

OPERATION
CONTROL
DEVICE

63    65

66 — | EVAPORATION EVALUATION |          | CONTROL DEVICE | — 73
                                                                    ~72
67 — | CORROSION EVALUATION |            | CONTROL DEVICE | — 74

SOLUTION
COMPOSITION
RECOGNIZING
DEVICE

68 — | PRECIPITATION EVALUATION |        | CONTROL DEVICE | — 75

69 ~ | MEMORY |                          | CRT | ~ 70

INPUT
DEVICE

62        64

| LC1 |   | LC2 |   | LC3 |

1

MEASURING
DEVICE

61    41    46    42

HIGH LEVEL
LIQUID
WASTE
CONCENTRA-
TION DEVICE

LIQUID
WASTE
RECEIVING
DEVICE

HEATING
DEVICE ~ 50

PART OF
REPROCESSING PLANT